# EUROPÄISCHE PATENTSCHRIFT

(11) **EP 3 853 114 B1**
(45) Veröffentlichungstag und Bekanntmachung des Hinweises auf die Patenterteilung: **13.09.2023**
(21) Anmeldenummer: 19790439.4
(22) Anmeldetag: 20.09.2019
(51) Int. Cl.: B62K 21/06

(54) **STEUERKOPFLAGERUNG FÜR LENKER VON ZWEI- UND DREIRADFAHRZEUGEN UND VERFAHREN ZUR HERSTELLUNG EINER SOLCHEN STEUERKOPFLAGERUNG**
HEAD MOUNTING FOR HANDLEBARS OF TWO- AND THREE-WHEEL VEHICLES AND METHOD FOR MANUFACTURING SUCH HEAD MOUNTING
TÊTE DE FIXATION POUR GUIDON DE VEHICULES A DEUX ET TROIS ROUES ET PROCEDE DE FABRICATION D'UNE TELLE TÊTE DE FIXATION

(30) Priorität: 21.09.2018 DE 102018123310
(43) Veröffentlichungstag der Anmeldung: 28.07.2021
(73) Patentinhaber: HWG Horst Weidner GmbH, 71272 Renningen (DE)
(72) Erfinder: BREITFELD, Sven, 71106 Magstadt (DE); LUTTER, Johannes, 70839 Gerlingen (DE)
(74) Vertreter: Patentanwälte Schuster, Müller & Partner mbB
(86) Internationale Anmeldenummer: PCT/DE2019/100828
(87) Internationale Veröffentlichungsnummer: WO 2020/057698

(56) Entgegenhaltungen:
- EP-A1- 2 848 508
- CN-Y- 2 463 298
- CN-Y- 2 606 049
- CN-Y- 2 608 404
- CN-Y- 2 608 405
- GB-A- 2 368 826
- TW-U- M 399 829
- US-A1- 2007 009 424
- US-A1- 2012 063 712

## Beschreibung

### Stand der Technik

Die Erfindung geht aus von einem Anschlag für Lenker von Zwei- und Dreiradfahrzeugen, der in die Steuerkopflagerung des Fahrzeugs integriert ist, nach der Gattung des Oberbegriffs des Anspruchs 1 sowie einem Verfahren zur Herstellung eines solchen Anschlags nach der Gattung des Oberbegriffs des Anspruchs 6.

US2012063712 offenbart die Merkmale des Oberbegriffes der Ansprüche 1 und 6.

Anschläge für Lenker von Zwei- und Dreiradfahrzeugen dienen der Vermeidung von Beschädigungen des Rahmens des Fahrzeugs sowie der am Lenker angeordneten Bedienelemente, wie beispielsweise Schalt-, Brems- und Kupplungshebeln, im Fall des unbeabsichtigten zu weiten Einschlagens des Vorderrades sowie des mit diesem drehfest verbundenen Lenkers. Dabei werden derartige Anschläge erst in einem nicht sicherheitsrelevanten Bereich wirksam, so dass das funktionsbedingte Lenken des Fahrzeugs nicht beeinträchtigt wird.

Bekannt ist hierzu ein Lenkanschlag für ein Fahrrad, bei dem die Funktion der Steuerkopflagerung und die Funktion des Lenkeranschlages in der oberen Steuerkopflagerung innenliegend angeordnet sind. Die Steuerkopflagerung besteht in bekannter Weise aus einer Lagerschale, die koaxial ein Wälzlager aufnimmt, einem das Wälzlager samt Lagerschale abdeckenden Steuersatzdeckel mit Dichtung und einer Klemmschelle, die kraftschlüssig mit dem Schaftrohr der Vorderradgabel verbindbar ist. Die Lagerschale der Steuerkopflagerung weist eine innenliegende halbkreisförmige Nut auf, in die im montierten Zustand eine an der dem Wälzlager zugewandten unteren Stirnfläche des Deckels der Steuerkopflagerung angeordnete Feder formschlüssig eingreift. An den beiden Enden der Nut befindet sich ein gummiartiger Zylinder, der den Anschlag des Lenkers dämpft. Der Deckel der Steuerkopflagerung ist an seiner oberen, freien Stirnfläche mit einer Aussparung versehen, in die im montierten Zustand die Klemmschelle formschlüssig eingreift, so dass der Steuersatzdeckel die Schwenkbewegung des Lenkers mitmacht, wobei sich die Feder innerhalb der halbkreisförmigen Nut bewegt. Ihre Bewegung und damit die Schwenkbewegung des Lenkers sind durch den Öffnungswinkel der Nut begrenzt (DE202008004845U).

Bekannt ist auch eine Einrichtung zum Begrenzen des Lenkeinschlagwinkels einer Lenkeinrichtung zwischen einer ersten und einer zweiten Endposition für ein Fahrrad, die ein Radführungseinrichtung und eine Fahrzeug-Rahmeneinrichtung aufweist. Die Randführungseinrichtung ist um eine Lenkachse drehbar in einem Steuerrohr der Fahrzeug-Rahmeneinrichtung gelagert. An der Radführungseinrichtung ist eine Lenkanschlageinrichtung mit einer ersten und einer zweiten Lenkanschlagsfläche angeordnet. An der Fahrzeug-Rahmeneinrichtung ist eine Anschlags-Gegeneinrichtung mit einer ersten und einer zweiten Anschlags-Gegenfläche angeordnet. In dieser ersten Endposition kontaktiert die erste Lenkanschlagfläche die erste Anschlag-Gegenfläche und in der zweiten Endposition kontaktiert die zweite Lenkanschlagfläche die zweite Anschlag-Gegenfläche. Die erste und zweite Lenkschlagfläche sind radial und axial wenigstens teilweise innerhalb dieses Steuerrohres angeordnet (EP 2 848 508 A1). Aufgrund der immer höheren Funktionsintegration von Schalt- und Versorgungsleitungen in den Bereich der oberen Steuerkopflagerung verbleibt hier immer weniger Bauraum für einen Lenkkopfanschlag. Zudem erfordert der oben beschriebene Lenkanschlag eine mit dem Steuerkopfrohr des Rahmens fest verbundene Lagerschale, die das Wälzlager aufnimmt. Diese Bauweise ist bei ca. 80% aller Fahrzeuge vorhanden. Bei den restlichen 20% der Fahrzeuge wird das Wälzlager direkt in das Steuerkopfrohr des Rahmens eingepresst. Bei diesen Fahrzeugen sind die oben beschriebenen Lenkanschläge nicht einsetzbar.

Die Aufgabe der Erfindung besteht somit darin, einen Anschlag für Lenker von Zwei- und Dreiradfahrzeugen zu entwickeln, der für alle Lenker unabhängig von der Einbauweise der Wälzlager anwendbar ist und die Funktionsintegration von Schalt- und Versorgungsleitungen in den Bereich der oberen Steuerkopflagerung nicht beeinträchtigt. Die Aufgabe der Erfindung besteht ferner darin, ein vereinfachtes Verfahren zur Herstellung eines Anschlages für Lenker von Zwei- und Dreiradfahrzeugen zu entwickeln.

### Die Erfindung und ihre Vorteile

Erfindungsgemäß wird die Aufgabe durch die kennzeichnenden Merkmale des Anspruchs 1 gelöst.

Der erfindungsgemäße Anschlag für Lenker von Zwei- und Dreiradfahrzeugen hat den wesentlichen Vorteil, dass er vollständig in das Steuerrohr des Rahmens des Fahrzeugs integriert ist. Er befindet sich einschließlich der Mittel, die das gesetzlich vorgeschriebene Drehmoment in Höhe von 60 Nm vom Lenkervorbau auf die Fahrzeuggabei übertragen, innerhalb der mit dem Steuerrohr verbundenen Lagerschale und damit komplett innerhalb des Rahmens des Fahrzeugs.

Das wird dadurch erreicht, dass der Lenkeranschlag an der unteren Steuerkopflagerung innerhalb des Steuerrohres angeordnet ist. Zu diesem Zweck besteht die untere Steuerkopflagerung aus einem mit der Gabel des Fahrzeugs drehfest verbundenen Boden, einem Wälzlager und einer drehfest mit dem Steuerrohr des Rahmens des Fahrzeugs verbundenen Lagerschale, in die der Boden und das Wälzlager einsetzbar sind. In dem Boden ist eine kreisbogenförmige Nut angeordnet, die zu dessen Außenumfang hin offen ist. Ihr Mindestöffnungswinkel richtet sich nach den gesetzlichen Vorschriften für Einschlagwinkel von Lenkern für Zweiradfahrzeuge. Für übliche Fahrräder und Trekkingräder beträgt dieser Winkel nach rechts und links jeweils 60°, also insgesamt 120°. Bei Rennrädern und Jugendfahrrädern beträgt der Winkel ± 30°, also insgesamt 60°.

Die Lagerschale weist eine sich über ihre Höhe erstreckende Ausnehmung auf, die das Anschlagelement aufnimmt. Das Anschlagelement weist über seine Höhe zwei unterschiedliche radiale Dicken auf, wobei die Dicke im Bereich des unteren Wälzlagers nicht größer als die radiale Tiefe der offenen Aussparung der unteren Lagerschale ist. Die Dicke im Bereich des Bodens ist so groß gewählt, dass das Anschlagelement in die kreisbogenförmige Nut des Bodens hineinragt.

Generell ist es aber auch möglich, die Funktionselemente des Anschlags gegeneinander auszutauschen, also das Anschlagelement in den Boden der unteren Steuerkopflagerung einzubringen. In dem Fall ist die kreisbogenförmige Nut dann allerdings in der Lagerschale anzuordnen. Der Boden selbst kann auch fester Bestandteil der Gabel des Fahrzeugs sein. In dem Fall ist die kreisbogenförmige Nut dort einzubringen oder das Anschlagselement dort zu befestigen oder es muss ein separates Teil zusätzlich in die untere Steuerkopflagerung eingebracht werden, das die Funktion des jeweiligen Funktionselementes des Anschlags ausführt.

Ebenso ist es auch möglich, dass die Lagerschale fester Bestandteil des Steuerrohres des Rahmens des Fahrzeugs ist. In dem Fall gilt das zuvor hinsichtlich eines fest mit der Gabel des Fahrzeugs verbundenen Bodens bezüglich der Anordnung der Funktionselemente des Anschlags Gesagte in adäquater Weise.

Nach einer vorteilhaften Ausgestaltung der Erfindung ist die der Drehachse der Steuerkopflagerung zugewandte Fläche des Anschlagelements im Bereich des koaxial anliegenden unteren Wälzlagers in der Weise konkav ausgebildet, dass sie der inneren Umfangsfläche der Lagerschale entspricht, also quasi die innere Umfangsfläche der Lagerschale fortsetzt. Dabei steht sie auf keinen Fall über die innere Umfangsfläche der Lagerschale hinaus, um an dieser Stelle einen übermäßigen radialen Druck auf das Wälzlager zu vermeiden. Das hat den Vorteil, dass sich das Anschlagelement in der Ausnehmung der Lagerschale in Umfangsrichtung leicht bewegen kann.

Nach einer besonders vorteilhaften Ausgestaltung der Erfindung ist zur drehfesten Verbindung des Bodens mit dem Schaftrohr der Gabel in dem Boden mindestens eine Längsnut zur Aufnahme eines Stiftes angeordnet. Der Stift ragt mit einem Teil seines Mantels geringfügig über die Innenwandung des Bodens hinaus in den vom Boden umschlossenen Innenraum hinein, so dass der auf die Gabel aufgeschlagene Boden drehfest mit der Gabel verbunden ist. Dadurch wird eine sichere kraft- und formschlüssige Verbindung zwischen Gabel und Boden erreicht. Vorteilhafterweise werden drei Längsnuten vorgesehen, die im gleichen Winkelabstand zueinander über den Innenumfang des Bodens verteilt sind.

In einer zusätzlichen vorteilhaften Ausgestaltung der Erfindung ist die Ausnehmung in der Lagerschale in Umfangsrichtung geringfügig breiter ausgebildet als das Anschlagelement. Der obere Bereich des Anschlagelements weist beidseitig eine Aussparung auf, die im montierten Zustand jeweils ein elastisches Teil aufnimmt, das den durch die Aussparungen gebildeten Raum zwischen Anschlagelement und Lagerschale zumindest in Umfangsrichtung ausfüllt. Dabei fangen die beiden elastischen Teile das Anschlagen des Bodens an dem Anschlagelement bei vollem Ausschlagen des Lenkers dämpfend ab, so dass kein metallisches Schlaggeräusch entsteht und sich die Lebensdauer des Lenkeranschlags erhöht.

Nach einer anderweitigen vorteilhaften Ausgestaltung der Erfindung ist die obere Stirnseite des erfindungsgemäßen Anschlagelements mit einer radial nach innen gerichteten Haltenase versehen, die im montierten Zustand auf der Oberkante des Außenrings des unteren Wälzlagers aufliegt. Dadurch wird ein Herausfallen des Anschlagelements aus der unteren Steuerkopflagerung vermieden.

Das Verfahren zur Herstellung des erfindungsgemäßen Anschlags für Lenker von Zwei- und Dreiradfahrzeugen gemäß der kennzeichnenden Merkmale des Anspruchs 6 hat den Vorteil, dass das Anschlagelement als separates Teil gefertigt und in einem Schritt zusammen mit dem Wälzlager gefügt werden kann. Die Herstellung des erfindungsgemäßen Anschlags erfolgt folgendermaßen:
In den Boden der unteren Steuerkopflagerung wird eine kreisbogenförmige Nut, die zum Außenumfang hin offen ist, eingebracht. In die Lagerschale wird eine sich über die Höhe der Lagerschale erstreckende Ausnehmung eingebracht. Das separat gefertigte Anschlagelement wird radial in die Position oberhalb der Ausnehmung der Lagerschale gebracht und zusammen mit dem Wälzlager in die Lagerschale eingepresst, wobei seine der Drehachse der Steuerkopflagerung zugewandte Innenfläche bündig mit dem Innenmantel der Lagerschale abschließt oder geringfügig hinter diesem zurücksteht.

Weitere Vorteile und vorteilhafte Ausgestaltungen der Erfindung sind der nachfolgenden Beschreibung, den Ansprüchen und den Zeichnungen entnehmbar.

### Zeichnung

Ein bevorzugtes Ausführungsbeispiel des erfindungsgemäßen Gegenstands ist in der Zeichnung dargestellt und wird im Folgenden näher erläutert. Es zeigen
- Fig. 1: eine Steuerkopflagerung mit dem erfindungsgemäßen Anschlag in einer isometrischen Explosivdarstellung,
- Fig. 2: die Steuerkopflagerung aus Fig. 1 in Explosivdarstellung im Schnitt,
- Fig. 3: die Steuerkopflagerung aus Fig. 1 im montierten Zustand im Schnitt,
- Fig. 4: den Boden der Baugruppe des erfindungsgemäßen Anschlags,
- Fig. 5: die Lagerschale der Baugruppe des erfindungsgemäßen Anschlags mit Anschlagelement,
- Fig. 6: die Baugruppe des erfindungsgemäßen Anschlags ohne Lagerschale in einer isometrischen Darstellung und
- Fig. 7: die gesamte Baugruppe des erfindungsgemäßen Anschlags in einer Ansicht von unten.

### Beschreibung des Ausführungsbeispiels

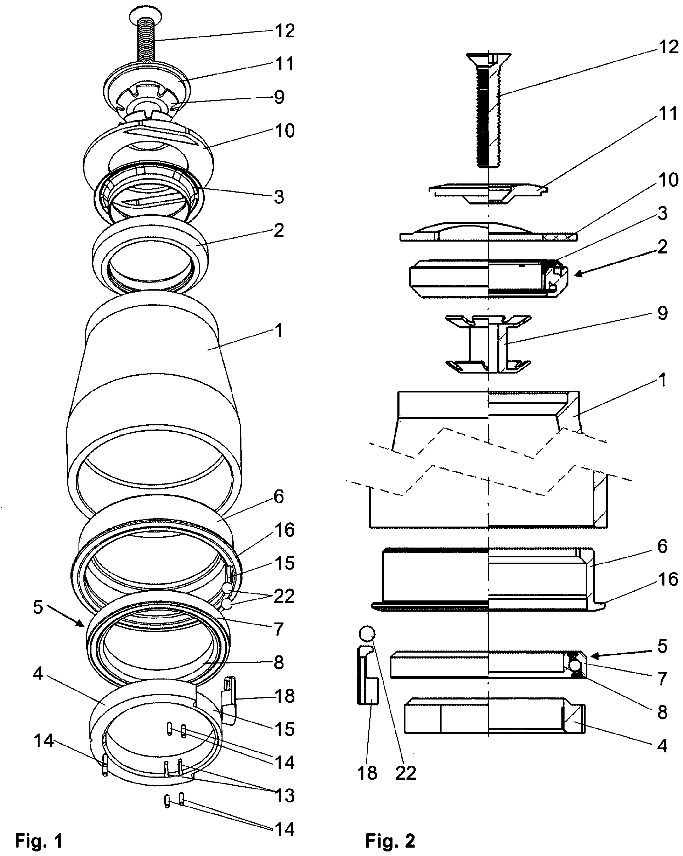

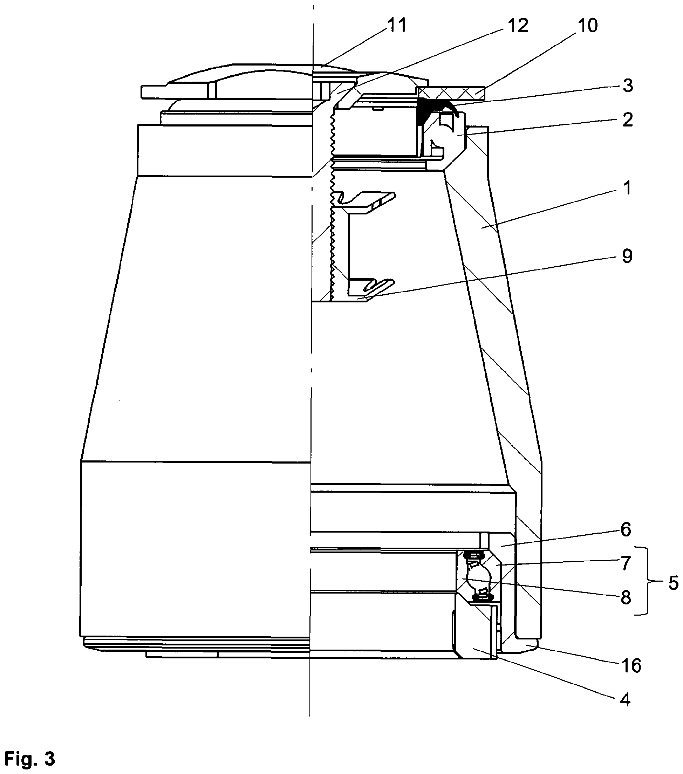

Die Fig. 1 und 2 zeigen eine Steuerkopflagerung mit dem erfindungsgemäßen Anschlag in Explosivdarstellung und die Fig. 3 mit diesem im eingebauten Zustand. Die Steuerkopflagerung ist in ein Steuerrohr 1 eines hier nicht dargestellten Rahmes eines Fahrzeuges eingebaut und besteht in bekannter Weise aus einer unterhalb des Lenkervorbaus des Lenkers des Fahrzeuges in dem Steuerrohr 1 angeordneten oberen und einer oberhalb der hier ebenfalls nicht dargestellten Gabel mit Gabelschaft des Fahrzeugs angeordneten unteren Steuerkopflagerung. Die obere Steuerkopflagerung weist ein oberes Wälzlager 2 auf, das mittels eines Klemmrings 3 in dem Steuerrohr 1 montiert ist (Fig. 3). Die untere Steuerkopflagerung besteht aus einem Boden 4, der auf den hier nicht dargestellten Gabelschaft aufgeschlagen wird, einem auf dem Boden 4 aufliegenden unteren Wälzlager 5 und einer unteren Lagerschale 6, in die das Wälzlager 5 mit seinem Außenring 7 eingepresst ist. Die untere Lagerschale 6 ist in die untere Öffnung des Steuerrohres 1 eingepresst (Fig. 3). Der Gabelschaft ist durch den Innenring 8 des Wälzlagers 5 und den Innenring des oberen Wälzlagers 2 hindurchgeführt und ragt bis in den oberen Klemmring 3 hinein. In die obere Öffnung des Gabelschafts ist eine Spannkralle 9 eingeschlagen, die das vom Fahrer auf den Lenker des Fahrzeugs aufgebrachte Lenk-Drehmoment über den hier ebenfalls nicht dargestellten Lenkervorbau auf die Gabel überträgt. Gemäß gesetzlicher Vorschrift liegt das Mindestdrehmoment bei 60 Nm.

Der Vollständigkeit halber sind in den Fig. 1 bis 3 noch die Teile dargestellt, die den Lenkervorbau mit der Gabel und dem Steuerrohr 1 verbinden: das Steuerrohr 1 ist mittels eines Spacers 10 abgedeckt. Der Lenkervorbau wird mittels eines Spanndeckels 11 und einer Einstellschraube 12 mit dem Gabelschaft fest und dem Steuerrohr 1 spielfrei drehbar verbunden.

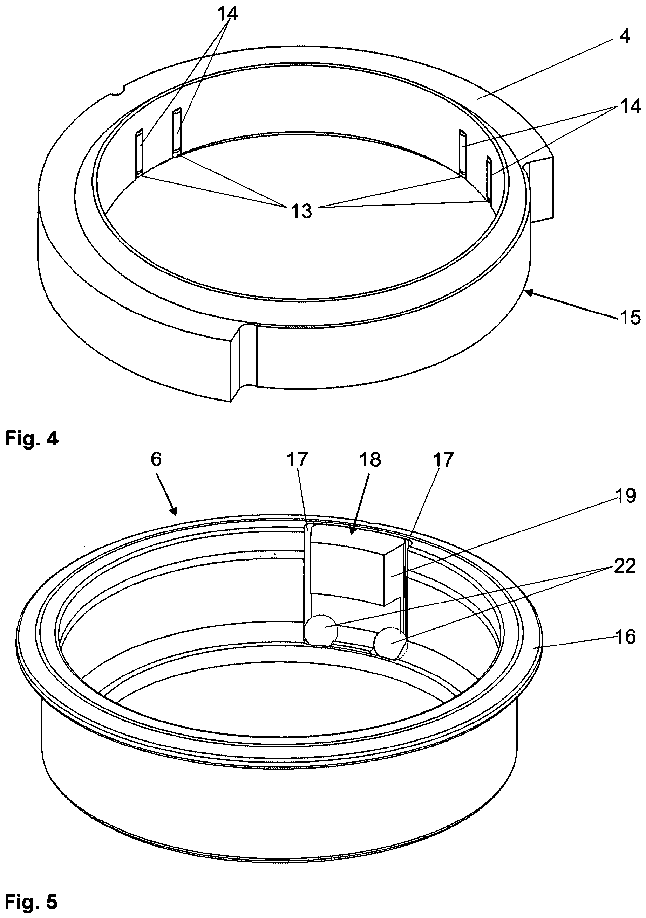

Die für den erfindungsgemäßen Anschlag für den Lenker des Fahrzeugs wesentliche Steuerkopflagerung ist die untere. Wie aus den Fig. 1 und 4 zu erkennen, weist der Boden 4 an seinem Innenmantel im vorliegenden Beispiel insgesamt sechs in axialer Richtung verlaufende Längsnuten 13 auf, die paarweise, in Einbaulage betrachtet, von unten in den Boden 4 im vorliegenden Beispiel als Sacklochbohrungen eingebracht sind. Die Wandung der Sacklochbohrungen ist zur Drehachse der Gabel hin offen, so dass in diese Sacklochbohrungen eingesetzte Stifte 14 geringfügig, im vorliegenden Beispiel ca. 0,15 mm, über die Innenwandung des Bodens 4 hervorstehen (Fig. 1, 4, 6 und 7). Beim Aufschlagen des Bodens 4 auf den Gabelschaft erzeugen die Stifte 14 eine Furche auf dessen Außenmantel, wodurch zusätzlich zu dem Kraftschluss noch ein Formschluss die Verdrehsicherung zwischen Boden 4 und Gabel gewährleistet. Durch die beschriebene Ausführung der Verdrehsicherung wird bei der Übertragung der Lenkbewegung auf die Gabel ein Drehmoment 120 Nm erreicht.

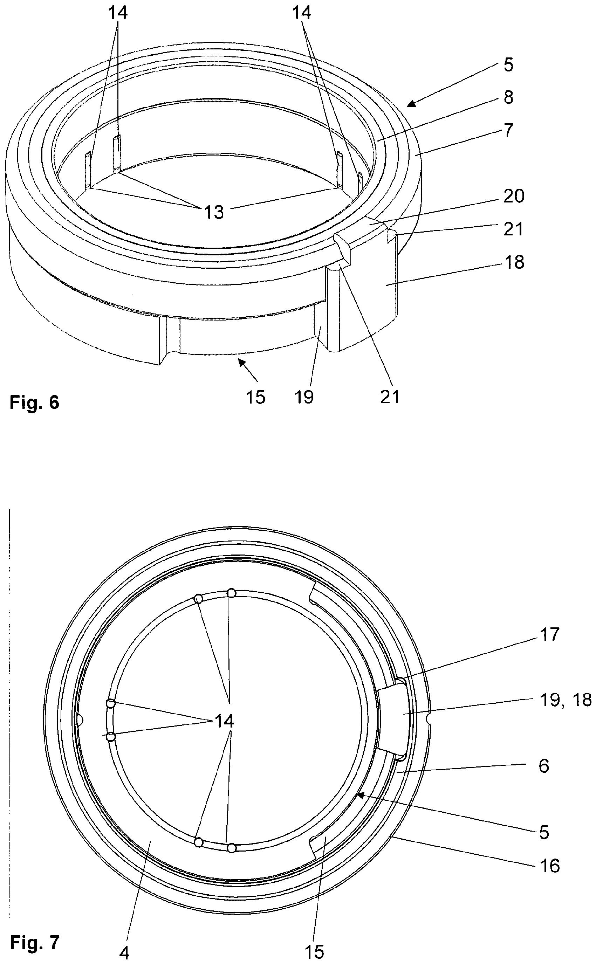

Wie insbesondere aus Fig. 4 erkennbar, ist der Außenumfang des Bodens 4 über ein Drittel mit einer zum Außenumfang hin offenen Ausnehmung 15 versehen. Der Winkel, den die Flanken der Ausnehmung 15 einschließen, beträgt 120°. Diesbezüglich lässt Fig. 7 erkennen, dass in diesem in der Dicke geschwächten Bereich keine Längsnuten 13 und Stifte 14 angeordnet sind.

Fig. 5 zeigt die untere Lagerschale 6 in umgekehrter Einbaulage. Die Höhe der unteren Lagerschale 6 entspricht mindestens der Summe der Höhe des Bodens 4 und des unteren Wälzlagers 5. Mit ihrem oberen Rand 16 liegt sie im montierten Zustand an der unteren Stirnfläche des Steuerrohres 1 an (Fig. 3). In den Innenmantel der unteren Lagerschale 6 ist eine parallel zur Drehachse der Steuerkopflagerung verlaufende und zum unteren Wälzlager 5 hin offene Aussparung 17 zur Aufnahme eines Anschlagelements 18 eingebracht. Wie auch aus Fig. 6 zu erkennen ist, besteht das Anschlagelement 18 aus einem quaderförmigen Körper, dessen wirksame Höhe der Höhe der unteren Lagerschale 6 und dessen Breite der Breite der offenen Aussparung 17 entspricht. Seine Dicke verändert sich in der Ebene, in der im montierten Zustand der Boden 4 und das untere Wälzlager 5 sich berühren, also aufeinanderliegen, sprunghaft, wobei seine Dicke in dem an dem unteren Wälzlagers 5 radial anliegenden Bereich so groß ist, dass sein Innenmantel nicht über den Innenmantel der unteren Lagerschale 6 übersteht. Von Vorteil ist, den Innenmantel des Anschlagelements 18, wie in Fig. 5 gezeigt, konkav auszubilden, so dass er quasi in Fortsetzung des Innenmantels der unteren Lagerschale 6 verläuft und gleichzeitig, wie aus Fig. 6 zu erkennen ist, an dem Außenmantel des unteren Wälzlagers 5 anliegt. In seinem dem Boden 4 gegenüberliegenden Bereich weist das Anschlagelement 18 einen radial nach innen vorspringenden Absatz 19 auf, der im montierten Zustand in die Ausnehmung 15 des Bodens 4 hineinragt. Für die Montage des erfindungsgemäßen Anschlags in der unteren Steuerkopflagerung bedeutet das also, dass beim Fügen des Anschlagelements 18 zusammen mit dem unteren Wälzlager 5 in die untere Lagerschale 6 das Anschlagelement 18 immer im Winkelbereich der Ausnehmung 15 positioniert sein muss. Um ein Herausfallen des Anschlagelementes 18 aus der offenen Aussparung 17 zu verhindern, ist seine obere Stirnseite mit einer Haltenase 20 versehen, die im montierten Zustand auf dem oberen Rand der unteren Lagerschale 6 aufliegt.

Eine vorteilhafte Ausgestaltung des erfindungsgemäßen Anschlags ist aus den Fig. 4 und 5 erkennbar. Um ein gedämpftes Anschlagen des Anschlagelements 18 an den Flanken der Ausnehmung 15 zu erreichen, ist das Anschlagelement 18 an seiner oberen Stirnseite im Bereich seiner Außenkanten ausgespart. Die beiden dadurch entstandenen Freiräume 21 werden im montierten Zustand von den Flanken der offenen Aussparung 17 der unteren Lagerschale 6 begrenzt und sind jeweils mit einem elastischen Element 22 ausgefüllt. Schlägt nun eine Flanke der Ausnehmung 15 des Bodens 4 bei einem Umschlagen des Lenkers des Fahrzeuges an dem Anschlagelement 18 an, weicht dieses bei gleichzeitiger Kompression des elastischen Elements 22 dem harten Anschlag aus. Dadurch erfährt der Anschlag eine Dämpfung, wodurch das ansonsten hörbare Aufeinandertreffen zweier metallischer Teile in der Lautstärke reduziert wird. Zudem wird der durch diese Kontaktierung bedingte Verschleiß der metallischen Teile verringert.

### Bezugszahlenliste

- 1: Steuerrohr
- 2: Oberes Wälzlager
- 3: Klemmring
- 4: Boden
- 5: Unteres Wälzlager
- 6: Untere Lagerschale
- 7: Außenring
- 8: Innenring
- 9: Spannkralle
- 10: Spacer
- 11: Spanndeckel
- 12: Einstellschraube
- 13: Längsnut
- 14: Stift
- 15: Ausnehmung
- 16: Rand
- 17: Offene Aussparung
- 18: Anschlagelement
- 19: Absatz
- 20: Haltenase
- 21: Freiraum
- 22: Elastisches Element

## Patentansprüche

1. Steuerkopflagerung mit einer oberen und unteren Steuerkopflagerung und mit einem Anschlag für Lenker von Zwei- und Dreiradfahrzeugen, die einen Rahmen mit einem Steuerrohr (1) und einer in diesem gelagerten Gabel, deren Schaftrohr einen Lenkervorbau des Lenkers des Fahrzeugs drehfest aufnimmt, aufweist, wobei in dem Steuerrohr (1) die obere und die untere Steuerkopflagerung mit jeweils einem Wälzlager (2, 5) angeordnet und der Anschlag in dem Steuerrohr (1) integriert ist, wobei der Anschlag durch ein Bauteil, das fest mit der Gabel verbunden ist und eine koaxial zu der Drehachse der oberen oder unteren Steuerkopflagerung angeordnete kreisbogenförmige Nut aufweist, und ein in diese Nut hineinragendes Anschlagelement (18) gebildet wird, das an einem fest mit dem Steuerrohr (1) verbundenen Bauteil derselben oberen oder unteren Steuerkopflagerung angeordnet ist und sich bei in Geradeausrichtung eingestelltem Lenkervorbau in der Mitte der kreisbogenförmigen Nut des fest mit der Gabel verbundenen Bauteils befindet,
**dadurch gekennzeichnet,**
**dass** der Anschlag an der unteren Steuerkopflagerung innerhalb des Steuerrohres (1) angeordnet ist, die aus einem mit der Gabel des Fahrzeugs drehfest verbundenen Boden (4), dem unteren Wälzlager (5) und einer drehfest mit dem Steuerrohr (1) des Rahmens des Fahrzeugs verbundenen, unteren Lagerschale (6), besteht, wobei
- die untere Lagerschale (6) den Boden (4) und das in Einbaulage über diesem angeordnete untere Wälzlager (5) koaxial aufnimmt,
- die kreisbogenförmige Nut in dem Boden (4) der unteren Steuerkopflagerung angeordnet und als eine zum Innenmantel der unteren Lagerschale (6) hin offene kreisbogenförmige Ausnehmung (15) ausgebildet ist,
- die untere Lagerschale (6) eine sich über ihre Höhe erstreckende zum unteren Wälzlager (5) hin offene Aussparung (17) aufweist, die das Anschlagelement (18) aufnimmt und
- das Anschlagelement (18) über seine Höhe mindestens zwei unterschiedliche radiale Dicken aufweist, wobei die Dicke im Bereich des unteren Wälzlagers (5) nicht größer ist als die radiale Tiefe der offenen Aussparung (17) der unteren Lagerschale (6) und die Dicke im Bereich des Bodens (4) so bemessen ist, dass das Anschlagelement (18) in die kreisbogenförmige Nut des Bodens (4) hineinragt.

2. Steuerkopflagerung nach Anspruch 1,
**dadurch gekennzeichnet,**
**dass** die der Drehachse der unteren Steuerkopflagerung zugewandte Fläche des Anschlagelements (18) im Bereich des koaxial anliegenden unteren Wälzlagers (5) in der Weise konkav ausgebildet ist, dass sie der inneren Umfangsfläche der unteren Lagerschale (6) und somit auch der äußeren Umfangsfläche des unteren Wälzlagers (5) entspricht.

3. Steuerkopflagerung nach Anspruch 1 oder 2,
**dadurch gekennzeichnet,**
**dass** zur drehfesten Verbindung des Bodens (4) mit dem Schaftrohr der Gabel in dem Boden (4) mindestens eine Längsnut (13) zur Aufnahme eines Stiftes (14) angeordnet ist, wobei der Stift (14) mit einem Teil seines Mantels geringfügig über die Innenwandung des Bodens (4) hinaus in den vom Boden (4) umschlossenen Innenraum hineinragt.

4. Steuerkopflagerung nach Anspruch 1, 2 oder 3,
**dadurch gekennzeichnet,**
**dass** die offene Aussparung (17) in der unteren Lagerschale (6) in Umfangsrichtung geringfügig breiter ausgebildet ist als das Anschlagelement (18) und der obere Bereich des Anschlagelements (18) beidseitig einen Freiraum (21) aufweist, der im montierten Zustand jeweils ein elastisches Teil (22) aufnimmt, das den durch die Aussparung (17) gebildeten Raum zwischen Anschlagelement (18) und unterer Lagerschale (6) zumindest in Umfangsrichtung ausfüllt.

5. Steuerkopflagerung nach einem der Ansprüche 1 bis 4,
**dadurch gekennzeichnet,**
**dass** die obere Stirnseite des Anschlagelements (18) mit einer radial nach innen gerichteten Haltenase (20) versehen ist, die im montierten Zustand auf der Oberkante des Außenrings (8) des unteren Wälzlagers (5) aufliegt.

6. Verfahren zur Herstellung einer Steuerkopflagerung mit einer oberen und unteren Steuerkopflagerung und mit einem Anschlag für Lenker von Zwei- und Dreiradfahrzeugen, die einen Rahmen mit einem Steuerrohr (1) und einer in diesem gelagerten Gabel, deren Schaftrohr einen Lenkervorbau des Lenkers des Fahrzeugs drehfest aufnimmt, aufweisen, wobei in dem Steuerrohr (1) der eine obere und der untere Steuerkopflagerung mit jeweils einem Wälzlager (2, 5) angeordnet und der Anschlag in dem Steuerrohr (1) integriert ist, wobei der Anschlag durch ein Bauteil, das fest mit der Gabel verbunden ist und eine koaxial zu der Drehachse der oberen oder unteren Steuerkopflagerung eingebrachten kreisbogenförmige Nut aufweist, und ein in diese Nut hineinragendes Anschlagelement (18) gebildet wird, das an einem fest mit dem Steuerrohr (1) verbundenen Bauteil derselben oberen oder unteren Steuerkopflagerung angeordnet ist und sich bei in Geradeausrichtung eingestelltem Lenkervorbau in der Mitte der kreisbogenförmigen Nut des fest mit der Gabel verbundenen Bauteils befindet,
**dadurch gekennzeichnet,**
- **dass** die kreisbogenförmige Nut in einen Boden (4) der unteren Steuerkopflagerung als eine zum Innenmantel einer unteren Lagerschale (6) hin offene kreisbogenförmige Ausnehmung (15) eingebracht wird,
- **dass** in die untere Lagerschale (6) eine sich über die Höhe der unteren Lagerschale (6) erstreckende Aussparung (17) eingebracht wird,
- **dass** das Anschlagelement (18) über seine Höhe mindestens zwei unterschiedliche radiale Dicken aufweist, wobei die Dicke im Bereich des unteren Wälzlagers (5) nicht größer ist als die radiale Tiefe der offenen Aussparung (17) der unteren Lagerschale (6) und die Dicke im Bereich des Bodens (4) so bemessen ist, dass das Anschlagelement (18) in die kreisbogenförmige Nut des Bodens (4) hineinragt und
- **dass** das Anschlagelement (18) radial in die Position oberhalb der offenen Aussparung (17) der unteren Lagerschale (6) gebracht und zusammen mit dem unteren Wälzlager (5) in die untere Lagerschale (6) eingepresst wird.

## Claims

1. A steering head bearing including an upper and a lower steering head bearing and a stop for handlebars of two-wheeled or three-wheeled vehicles which have a frame including a steering tube (1) and a fork supported therein whose shaft tube receives a handle bar stem of the handlebar of the vehicle in a co-rotational manner, said steering tube (1) having the upper and lower steering head bearings with respective rolling bearings (2, 5) arranged therein and the stop being incorporated in the steering tube (1), said stop being formed by a component which is fixedly connected with the fork and has a circularly arcuate groove arranged coaxially with respect to the axis of rotation of the upper and lower steering head bearings and by a stop element (18) projecting into this groove which is arranged on a component of those same upper and lower steering head bearings that is fixedly connected with the steering tube (1) and which is located in the middle of the circularly arcuate groove of the component fixedly connected with the fork when the handlebar stem is oriented in a straight-ahead direction, **characterised in that**
the stop is arranged within the steering tube (1) on the lower steering head bearing, which consists of a base (4) co-rotationally connected with the fork of the vehicle, the lower rolling bearing (5), and a lower bearing shell (6) co-rotationally connected with the steering tube (1) of the frame of the vehicle, wherein
- the lower bearing shell (6) coaxially receives the base (4) and the lower rolling bearing (5) arranged thereabove in its mounting position,
- the circularly arcuate groove is arranged in the base (4) of the lower steering head bearing and is formed in the shape of a circularly arcuate recess (15) which is open towards the inner lateral surface of the lower bearing shell (6),
- the lower bearing shell (6) has a cavity (17) which extends over its height and is open towards the lower rolling bearing (5), and which receives the stop element (18), and
- the stop element (18) has at least two different radial thicknesses formed over its height, the thickness in the region of the lower rolling bearing (5) being not greater than the radial depth of the open cavity (17) of the lower bearing shell (6), and the thickness in the region of the base (4) being such that the stop element (18) protrudes into the circularly arcuate groove of the base (4).

2. The steering head bearing as claimed in claim 1,
**characterised in that**
the surface of the stop element (18) facing towards the axis of rotation of the lower steering head bearing is concavely shaped in the region of the coaxially abutting lower rolling bearing (5), in such a manner that it corresponds to the inner circumferential surface of the lower bearing shell (6), and thus also corresponds to the outer circumferential surface of the lower rolling bearing (5).

3. The steering head bearing as claimed in claim 1 or 2,
**characterised in that**
for connecting the base (4) and the shaft tube of the fork, at least one longitudinal groove (13) for receiving a pin (14) is arranged in the base (4), with a portion of the lateral surface of said pin (14) slightly protruding beyond the inner wall of the base (4) and into the inner space enclosed by said base (4).

4. The steering head bearing as claimed in claim 1, 2, or 3,
**characterised in that**
the open cavity (17) provided in the lower bearing shell (6) is slightly larger in the circumferential direction than the stop element (18) and **in that** the upper region of said stop element (18) has an empty space (21) formed on both sides thereof, said empty spaces, in the assembled state, receiving each an elastic member (22) which fills up the space formed by the cavity (17) between the stop element (18) and the bearing shell (6), at least in the circumferential direction.

5. The steering head bearing as claimed in any one of claims 1 to 4,
**characterised in that**
the upper end face of the stop element (18) is provided with a radially inwardly oriented retaining nose (20) which, in an assembled state, rests on the upper edge of the outer ring (8) of the lower rolling bearing (5).

6. A method of fabricating a steering head bearing including an upper and a lower steering head bearing and a stop for handlebars of two-wheeled or three-wheeled vehicles which have a frame including a steering tube (1) and a fork supported therein whose shaft tube receives a handle bar stem of the handlebar of the vehicle in a co-rotational manner, said steering tube (1) having the upper and lower steering head bearings with respective rolling bearings (2, 5) arranged therein and the stop being incorporated in the steering tube (1), said stop being formed by a component which is fixedly connected with the fork and has a circularly arcuate groove arranged coaxially with respect to the axis of rotation of the upper and lower steering head bearings and by a stop element (18) projecting into this groove which is arranged on a component of those same upper and lower steering head bearings that is fixedly connected with the steering tube (1) and which is located in the middle of the circularly arcuate groove of the component fixedly connected with the fork when the handlebar stem is oriented in a straight-ahead direction,
**characterised in that**
- the circularly arcuate groove is arranged in a base (4) of the lower steering head bearing and is formed in the shape of a circularly arcuate recess (15) which is open towards the inner lateral surface of a lower bearing shell (6),
- a cavity (17) extending over the height of the lower bearing shell (6) is realised in the lower bearing shell (6),
- the stop element (18) has at least two different radial thicknesses formed over its height, the thickness in the region of the lower rolling bearing (5) being not greater than the radial depth of the open cavity (17) of the lower bearing shell (6), and the thickness in the region of the base (4) being such that the stop element (18) protrudes into the circularly arcuate groove of the base (4), and
- the stop element (18) is radially brought into position above the open cavity (17) of the lower bearing shell (6) and, in conjunction with the lower rolling bearing (5), is being pressed into the lower bearing shell (6).

## Revendications

1. Palier de direction pourvu d'un palier de direction supérieur et d'un palier de direction inférieur ainsi que d'une butée pour guidon de véhicules à deux et à trois roues lesquels présentent un cadre pourvu d'un tube de direction (1) et d'une fourche qui est logée dans celui-ci et dont le pivot reçoit en corotation une potence de guidon du guidon du véhicule, le palier de direction supérieur et le palier de direction inférieur pourvus, chacun, d'un palier à roulement (2, 5) étant disposés dans le tube de direction (1) et la butée étant intégrée dans ledit tube de direction (1), la butée étant formée par un composant qui est assemblé de manière fixe à la fourche et qui présente une rainure en forme d'arc de cercle disposée coaxialement à l'axe de rotation du palier de direction supérieur et du palier de direction inférieur, et par un élément butée (18) lequel pénètre dans ladite rainure et est disposé sur un composant desdits paliers de direction supérieur et inférieur qui est assemblé de manière fixe au tube de direction (1), et lequel se trouve, lorsque la potence de guidon est en alignement droit, au centre de la rainure en arc de cercle du composant assemblé de manière fixe à la fourche,
**caractérisé en ce que**
la butée est disposée à l'intérieur du tube de direction (1), sur le palier de direction inférieur qui est constitué d'un fond (4) relié en corotation à la fourche du véhicule, du palier à roulement inférieur (5) et d'un coussinet de palier inférieur (6) relié en corotation au tube de direction (1) du cadre du véhicule,
- le coussinet de palier inférieur (6) recevant de manière coaxiale le fond (4) et le palier à roulement inférieur (5) qui, en position de montage, est disposé au-dessus de celui-ci,
- la rainure en arc de cercle étant disposée dans le fond (4) du palier de direction inférieur et étant réalisée sous la forme d'un évidement (15) en arc de cercle qui est ouvert en direction de l'enveloppe intérieure du coussinet de palier inférieur (6),
- le coussinet de palier inférieur (6) présentant une cavité (17) qui s'étend sur la hauteur de celui-ci et est ouverte en direction du palier à roulement inférieur (5) et laquelle reçoit l'élément butée (18) et
- l'élément butée (18) présentant sur sa hauteur au moins deux épaisseurs radiales différentes, l'épaisseur située dans la zone du palier à roulement inférieur (5) n'étant pas supérieure à la profondeur radiale de la cavité ouverte (17) du coussinet de palier inférieur (6), et l'épaisseur située dans la zone du fond (4) étant dimensionnée de manière telle que l'élément butée (18) pénètre dans la rainure en arc de cercle du fond (4).

2. Palier de direction selon la revendication 1,
**caractérisé en ce que**
la surface de l'élément butée (18) qui est tournée vers l'axe de rotation du palier de direction inférieur est formée de manière concave dans la zone du palier à roulement inférieur (5) qui est en contact coaxial, et ce de manière telle qu'elle correspond à la surface circonférentielle intérieure du coussinet de palier inférieur (6) et, par conséquent, à la surface circonférentielle extérieure du palier à roulement inférieur (5).

3. Palier de direction selon la revendication 1 ou 2,
**caractérisé en ce que**
au moins une rainure longitudinale (13) destinée à recevoir un tenon (14) est disposée dans le fond (4) en vue d'assurer une liaison corotationnelle entre ledit fond (4) et le pivot de la fourche, une partie de l'enveloppe du tenon (14) dépassant légèrement de la paroi intérieure du fond (4) pour pénétrer dans l'espace intérieur entouré par le fond (4).

4. Palier de direction selon la revendication 1, 2 ou 3,
**caractérisé en ce que**
la cavité ouverte (17) ménagée dans le coussinet de palier inférieur (6) est réalisée de manière à être, en sens circonférentiel, légèrement plus large que l'élément butée (18) et **en ce que** la partie supérieure de l'élément butée (18) présente, des deux côtés, un espace libre (21) qui reçoit, à l'état monté, respectivement une pièce élastique (22) qui remplit, au moins en sens circonférentiel, l'espace formé par la cavité (17) entre l'élément butée (18) et le coussinet de palier inférieur (6).

5. Palier de direction selon l'une quelconque des revendications 1 à 4, **caractérisé en ce que**
la face frontale supérieure de l'élément butée (18) est pourvue d'un ergot de retenue (20) orienté radialement vers l'intérieur qui, à l'état monté, repose sur l'arête supérieure de l'anneau extérieur (8) du palier à roulement inférieur (5).

6. Procédé destiné à réaliser un palier de direction pourvu d'un palier de direction supérieur et d'un palier de direction inférieur ainsi que d'une butée pour guidon de véhicules à deux et à trois roues lesquels présentent un cadre pourvu d'un tube de direction (1) et d'une fourche qui est logée dans celui-ci et dont le pivot reçoit en corotation une potence de guidon du guidon du véhicule, le palier de direction supérieur et le palier de direction inférieur pourvus, chacun, d'un palier à roulement (2, 5) étant disposés dans le tube de direction (1) et la butée étant intégrée dans ledit tube de direction (1), la butée étant formée par un composant qui est assemblé de manière fixe à la fourche et qui présente une rainure en forme d'arc de cercle ménagée coaxialement à l'axe de rotation des paliers de direction supérieur et inférieur, et par un élément butée (18) qui pénètre dans ladite rainure et qui est disposé sur un composant desdits paliers de direction supérieur et inférieur qui est assemblé de manière fixe au tube de direction (1) et qui se trouve, lorsque la potence de guidon est en alignement droit, au centre de la rainure, en arc de cercle du composant assemblé de manière fixe à la fourche,
**caractérisé en ce que**
- la rainure en arc de cercle est réalisée dans un fond (4) du palier de direction inférieur sous la forme d'un évidement (15) en arc de cercle qui est ouvert en direction de l'enveloppe intérieure d'un coussinet de palier inférieur (6),
- dans le coussinet de palier inférieur (6) est réalisée une cavité (17) qui s'étend sur la hauteur dudit coussinet de palier inférieur (6),
- l'élément butée (18) présente sur sa hauteur au moins deux épaisseurs radiales différentes, l'épaisseur située dans la zone du palier à roulement inférieur (5) n'étant pas supérieure à la profondeur radiale de la cavité ouverte (17) du coussinet de palier inférieur (6), et l'épaisseur située dans la zone du fond (4) étant dimensionnée de manière telle que l'élément butée (18) pénètre dans la rainure en arc de cercle du fond (4) et
- l'élément butée (18) est amené radialement dans la position située au-dessus de la cavité ouverte (17) du coussinet de palier inférieur (6) et est pressé, conjointement au palier à roulement inférieur (5), dans le coussinet de palier inférieur (6).
